Europäisches Patentamt

European Patent Office

Office européen des brevets

(19)

(11) **EP 1 179 201 B1**

(12) **EUROPÄISCHE PATENTSCHRIFT**

(45) Veröffentlichungstag und Bekanntmachung des Hinweises auf die Patenterteilung:
**10.09.2003 Patentblatt 2003/37**

(21) Anmeldenummer: **00941954.0**

(22) Anmeldetag: **05.05.2000**

(51) Int Cl.$^7$: **G06K 15/00**

(86) Internationale Anmeldenummer:
**PCT/EP00/04041**

(87) Internationale Veröffentlichungsnummer:
**WO 00/068877 (16.11.2000 Gazette 2000/46)**

(54) **VERFAHREN UND SYSTEM ZUM AUSSCHIESSEN VON DRUCKDATEN**

METHOD AND SYSTEM FOR IMPOSING PRINT DATA

PROCEDE ET SYSTEME POUR L'IMPOSITION DE DONNEES D'IMPRESSION

(84) Benannte Vertragsstaaten:
**FR GB**

(30) Priorität: **07.05.1999 DE 19921120**

(43) Veröffentlichungstag der Anmeldung:
**13.02.2002 Patentblatt 2002/07**

(73) Patentinhaber: **Océ Printing Systems GmbH**
**85586 Poing (DE)**

(72) Erfinder:
• **KOWALSKI, Jacek**
**53844 Troisdorf (DE)**
• **WEGELE, Petra**
**80339 München (DE)**

(74) Vertreter: **Schaumburg, Thoenes & Thurn**
**Postfach 86 07 48**
**81634 München (DE)**

(56) Entgegenhaltungen:
**EP-A- 0 608 685     EP-A- 0 741 877**
**US-A- 4 672 462     US-A- 5 398 289**

## Beschreibung

Die Erfindung betrifft ein Verfahren und ein System für das Ausschießen von Druckdaten, insbesondere zur Verarbeitung eines digitalen Druckdatenstroms.

Im Bereich des digitalen Druckens hat sich ein Spezialgebiet gebildet, das sogenannte "Print on Demand" (PoD). Ein entsprechendes POD-System ist z.B. unter dem Titel "Entwicklung neuer Medien-Konzepte für POD-Dienstleister" in der Zeitschrift Deutscher Drukker Nr. 35/98 vom 17.09.98 beschrieben.

Gegenüber konventionellem Offset-Buchdruck sind die Vorteile solcher POD-Systeme, daß Druckgut in kurzer Zeit (just-in-time) hergestellt werden kann. Kleine Auflagen von etwa 2 bis 2000 Exemplaren können damit wirtschaftlich verlegt werden. Auf Anfrage kann damit kurzfristig eine bestimmte, aktuell benötigte Anzahl von Büchern gedruckt werden. Damit können Kosten für die Lagerhaltung sowie für Überbestände von Büchern eingespart werden.

Andererseits besteht bei POD-Systemen die Notwendigkeit, das Layout des Ausdrucks, insbesondere das Ausschießen der Druckdaten, ebenfalls performant zu gestalten. Während im konventionellen Buchdruck für diese Vorgänge relativ viel Zeit zur Verfügung steht, muß dieser Vorgang bei POD-Systemen in relativ kurzer Zeit bewerkstelligt werden, um die oben genannten Vorteile einer just-in-time Produktion erreichen zu können. Diesem Erfordernis wirkt zum einen entgegen, daß im Zuge einer Druckproduktion von Büchern oder gebundenen Broschüren eine Vielzahl von Einstellmöglichkeiten und Anforderungen besteht. Bei einem POD-Drucksystem ist in der Regel ein dem Druckgerät nachgeschaltetes Nachverarbeitungssystem angeschlossen, welches das vom Drucksystem bedruckte Material zu einem gedruckten Dokument wie einem Buch oder einer Broschüre zusammenfaßt. Beispielsweise kann dem Druckgerät ein Sattelhefter oder ein Spiralbinder nachgeschaltet sein, mit dem die gedruckten Seiten zu einem Buch oder zu einer Broschüre gebunden werden.

Zwischen dem Druckgerät, welches die Aufzeichnungsträger bedruckt und dem Bindesystem kann des weiteren eine Falteinrichtung vorgesehen sein, wenn das POD-Drucksystem Druckgut signaturenweise erzeugt. Grundlagen und verschiedene, konkrete Varianten von Falttechniken und Signaturen sind beispielsweise in dem von der zur Heidelberger Druckmaschinen AG, 69115 Heidelberg, gehörenden Stahl GmbH herausgegebenen Broschüre "Folding Techniques", Bestell-Nr. 1-800-437-7388 (Heidelberger) beschrieben. In diesem Dokument sind verschiedene Signaturen-Schemata und damit verbundene Ausschießmuster für Bogendruck- und Rollendrucksysteme beschrieben.

Wie bereits oben erwähnt, besteht bei POD-Systemen die Anforderung, die Druckdaten und damit auch den Ausschießvorgang möglichst performant, d.h. schnell und weitgehend automatisiert durchzuführen. Dementsprechend besteht auch die Anforderung, Ausschießmuster, d.h. die Anordnung der Seiten-folge auf dem Aufzeichnungsträger bzw. Druckbogen, möglichst weitgehend so automatisiert zu gestalten, daß sowohl die Seitenfolge als auch die Position des Druckbilds auf den Seiten des letztendlich erzeugten Druckguts (Buch, Broschüre oder dgl.) genau der Lesereihenfolge entspricht. Eine weitere Forderung ist dabei, eine bestimmte Passergenauigkeit aufeinanderfolgender Seiten im Druckgut zu erreichen. Dieser Anforderung wirkt im Signaturendruck die durch Faltung des Bogens und Beschneidung der Kanten bedingte Druckbildverschiebung entgegen.

Aus der US-A-4 672 462 ist ein Verfahren und ein System zur Aufzeichnung von mehreren Bildern auf einen lichtempfindlichen Film bekannt, wobei die Bilder mehreren Blättern konventioneller Buchbindungen entsprechen. Das Layout der Druckbilder wird vorm Belichten entsprechend den Vorgaben einer Bedienperson der gewünschten Bindung angepaßt.

In der EP-A- 741 877 B1 bzw. in der dieser entsprechenden WO-A-95/20185 ist ein Drucksystem beschrieben, bei dem an einem Druckgerät verschiedene Nachverarbeitungssysteme zur Verarbeitung des auf Papier gedruckten Seitenstroms bis hin zu einer Einrichtung zum Binden von Dokumenten angeschlossen sind.

Aus der EP-A-0 608 685 ist eine Vorrichtung zum Erzeugen von Broschüren aus eingelesenen Bildern. Die Bilder werden zum Erzeugen von Druckseiten gemäß Vorgaben automatisch gedreht und in ihren Abmaßen angepaßt.

Ein Verfahren und ein System zum Drucken von Signaturen ist aus der US-A-5 398 289 bekannt. Die Ansprüche wurden gegen dieses Dokument abgegrenzt. Bei der Ausgabe einzelner Blätter mit bis zu vier Druckseiten wird eine nicht passergenaue Lage der Druckbilder beim Druck korrigiert, die durch eine Verschiebung der Druckbilder infolge einer Faltung der Signatur am Bundsteg entsteht. Jedoch ist aus der US -A - 5 398 289 keine Möglichkeit zur Korrektur der faltungsbedingten Druckbildverschiebung auf Druckbögen bekannt, die zum Erzeugen von Signaturen mehrere Faltachsen haben.

Aufgabe der Erfindung ist es, die Passergenauigkeit von Druckseiten in mit Signaturen hergestelltem Druckgut auch bei mehreren Faltungen des Druckbogens sicherzustellen, wobei Anschuss vermieden werden soll.

Diese Aufgabe wird durch die in den unabhängigen Ansprüchen beschriebene Erfindung gelöst. Vorteilhafte Weiterbildungen der Erfindung sind Gegenstand der Unteransprüche.

Gemäß einem ersten Aspekt der Erfindung werden Druckdaten in einer logischen, einer oder mehreren Signaturen entsprechenden Seitenfolge zum Drucken bereitgestellt. Die Bereitstellung kann innerhalb eines Produktionsprozesses für Druckgut (work flow) beispielsweise in einem Host-Computer, in einem Druckgerät vorgeschalteten Computer (Druckserver) oder auch auf einer anderen Arbeitsstation (Client-Computer) erfolgen. Die Bereitstellung erfolgt insbesondere als Ausschießmuster in einem Produktionssteuerungsprogramm.

Des weiteren ist erfindungsgemäß vorgesehen, eine Positionskorrektur der ausgeschossenen Seiten derart durchzuführen, daß die Druckbilder aufeinanderfolgender. Seiten in der gefalteten Signatur, d.h. am fertigen Druckgut, passergenau zueinander liegen. Diese Positionskorrektur wird im folgenden auch als Satzspiegelkorrektur bezeichnet.

Die Erfindung beruht auf der Erkenntnis, daß die Faltung von Druckbögen zum Erzeugen von Signaturen rechnerisch simuliert werden kann. Bei der Erfindung wird insbesondere anhand der Verteilung der Druckseiten auf dem Bogen, d.h. anhand des Signaturenmusters, die Faltung des Bogens rechnerisch simuliert. Anhand eines Parameters des Aufzeichnungsträgers, beispielsweise seiner Dicke oder seines Gewichts, wird die Verschiebung der Seitenpositionen innerhalb des Druckguts, welches durch die mehrfache Faltung des Bogens stattfindet, ausgeglichen. Obwohl es für einen Druckbogen mehrere Abfolgevarianten für die einzelnen, durchzuführenden Faltungen gibt, muß letztendlich jede dieser Varianten zum selben Faltergebnis führen, da die Lesereihenfolge von der ersten Seite bis zur letzten Seite innerhalb des fertiggestellten Druckgutes unabhängig von der Faltreihenfolge immer gleich sein muß.

Erfindungsgemäß wurde des weiteren erkannt, daß die physikalische Faltung eines Bogens rechnerisch simulierbar ist, und daß damit eine automatisierte Korrektur der faltungsbedingten Verschiebung bzw. einer Passerungenauigkeit von aufeinanderfolgenden Druckseiten im fertigen Druckgut computergesteuert durchführbar ist.

Mit der Erfindung wird der Vorteil erreicht, daß die Passergenauigkeit aufeinanderfolgender Druckseiten automatisch hergestellt wird, ohne anwenderseitig Untersuchungen oder Berechnungen anstellen zu müssen. Die automatische Korrektur erfolgt somit abhängig vom angegebenen Ausschießschema, das die Verteilung der Druckseiten auf dem Bogen festlegt sowie von einem weiteren, von der Art des Aufzeichnungsträgers abhängenden Parameter wie dessen spezifisches Gewicht, Durchmesser und/oder Material.

Durch die weitgehend automatische Korrektur ist die angegebene Lösung äußerst anwenderfreundlich und führt zu einer insgesamt schnelleren Produktion von Druckgut.

Ein Algorithmus, der die richtige Faltung des Druckbogens errechnet und die damit bewirkten Druckseitenverschiebungen simuliert, arbeitet insbesondere auf einer seitenweisen Basis, wobei jeweils Paare aufeinanderfolgender Seitennummern gebildet werden, die durch die Signatur bedingt bzw. durch das Ausschießschema bedingt aufeinandergefaltet werden müssen. Die Arbeitsabfolge des Algorithmus ist dabei insbesondere seitenweise in auf- oder absteigender Seitenreihenfolge. Dabei wird zunächst überprüft, ob auf der Basis der zuvor erfolgten Faltungen eine Faltung zwischen den beiden Paaren möglich ist; ggf. werden die Faltung simuliert sowie die daraus resultierenden Korrekturwerte zur Positionskorrektur berechnet.

Ein Vorteil des erfindungsgemäßen Verfahrens, bei dem die Positionskorrektur seitenindividuell für jede Signatur berechnet wird, ist, daß das Verfahren auch für ungewöhnliche, vom Bediener selbst erstellte Signaturenmuster eine automatische Positionskorrektur durchführen kann. Gleichwohl können für Standard-Signaturen sowie für Standard-Aufzeichnungsträger Seitenkorreturwerte gespeichert werden und ggf. direkt abgerufen werden.

Weitere Details erfindungsgemäßer, bevorzugter Korrekturverfahren bzw. Berechnungsalgorithmen werden nachfolgend anhand der Figurenbeschreibung näher erläutert.

Ein zweiter Aspekt der Erfindung betrifft den Arbeitsablauf (work flow) bei der Erstellung von Druckgut. Im Zuge des Ausschießens von Druckseiten ist vorgesehen, einen Druckdatenstrom (z.B. PCL oder Postscript) zunächst einem Rasterprozeß zu unterziehen und die gerasterten Daten dann seitenweise weiter zu verarbeiten. Im Zuge dieser Weiterverarbeitung ist zunächst vorgesehen, Informationen seitenweise zusammenzuführen, die Seiten zu überlagern, auszuschneiden oder in den Seiten variable Daten mit statischen Daten zu kombinieren. In dem darauffolgenden Verarbeitungsschritt erfolgt das Ausschießen der Druckdaten, wobei wahlweise Standard-Signaturen gewählt oder individuelle Signaturen erstellt werden können. Schließlich erfolgt eine Bearbeitung der ausgeschossenen Druckseiten, wobei ihre Positionen auf dem Aufzeichnungsträger individuell eingestellt werden können oder Leerseiten eingefügt werden können. Ferner kann die im ersten Aspekt der Erfindung beschriebene Passerkorrektur durchgeführt werden sowie Marken auf den Signaturen definiert werden. Schließlich erfolgen druckerspezifische Einstellungen wie die Wahl von Eingabefächern des Druckgeräts sowie des auszudruckenden Druckbereichs. Weitere Vorteile und Details der Erfindung werden anhand der Figuren näher erläutert. Es zeigen:

Figur 1:

Systemkomponenten eines POD-Drucksystems

Figur 2:

Ein Auswahl-Menü, in dem der Arbeitsablauf eines erweiterten Ausschießvorgangs deutlich wird

Figur 3:

Ein Auswahlfenster zum Mischen von Daten

Figur 4:

Ein Auswahlfenster zum Beschneiden von Bildern (Images)

Figur 5:

Ein Auswahlfenster zum Überlagern von Druckdateien

Figur 6:

Ein Auswahlfenster zum Einbinden variabler Daten in einen Druckdatenstrom

Figur 7:

Ein Auswahlfenster zum Festlegen eines Ausschießschemas

Figur 8:

Ein Signaturen-Auswahlfenster

Figur 9:

Ein Auswahlfenster zum Positionieren der Seiten auf dem Druckbogen

Figur 10:

Ein Auswahlfenster für die Satzspiegelkorrektur

Figur 11:

Ein Auswahlfenster zum Einfügen leerer Druckbögen

Figur 12:

Ein Auswahlfenster zur Festlegung von Marken

Figur 13:

Ein Auswahlfenster zur Festlegung von Eingabefächern und Job-Versatz

Figur 14:

Ein Signaturen-Muster

Figur 15:

Ein Beispiel zum Falten einer Signatur

Figur 16:

Das Druckbild einer satzspiegelkorrigierten Seitenfolge

Figur 17:

Ein Ausschießschema

Fig 18:

Ein Flußdiagramm zur Satzspiegelkorrektur und

Fig 19:

Ein Arbeitsablaufdiagramm.

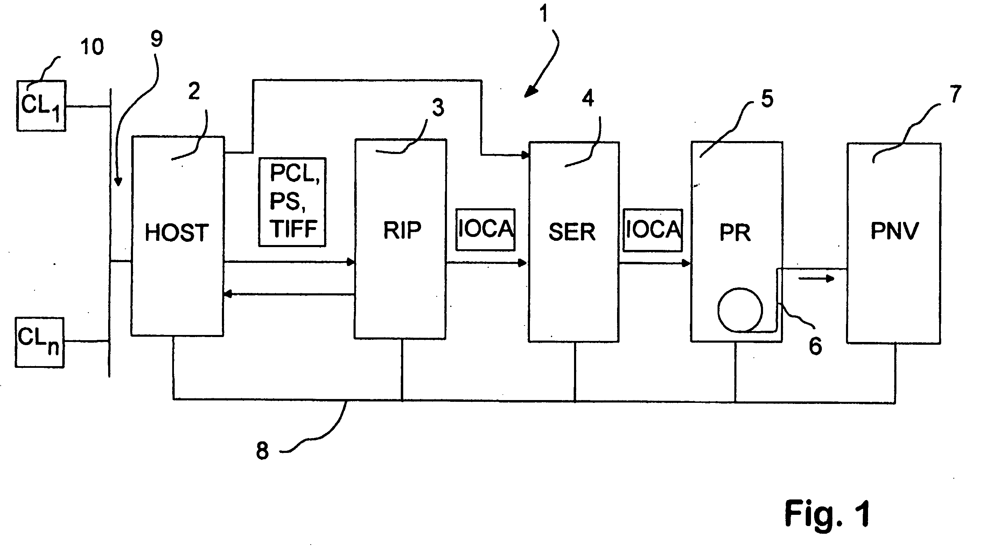

In Figur 1 ist ein PoD-Drucksystem 1 dargestellt. Es umfaßt eine Datenquelle 2, beispielsweise einen Host-Computer, an der Druckdateien über ein Netzwerk 9 (LAN, WAN) in einem bestimmten Druckdatenformat, beispielsweise in PCL, Postscript oder dgl. zum Drucken ausgegeben werden. Diese Dateien werden bedarfsweise einem Raster-Image Prozessor (RIP) 3 zugeleitet, der die Daten der Dateien seitenweise in ein pixelbasiertes Format wie z.B. TIFF oder IOCA umwandelt. Die so erzeugten seitenweise Daten, beispielsweise im IOCA-Format, werden dann dem Druckserver 4 zugeführt. Im Druckserver 4 werden die seitenweisen Daten ausgabespezifisch aufbereitet. Hierbei erfolgen insbesondere die Verarbeitungsschritte einer Integration bzw. Zusammenführung von Daten, das Ausschießen sowie das weitere Verarbeiten der ausgeschossenen Daten. Beim Integrieren können auch bereits früher gerasterte Daten, die im Host-Computer 2 oder im Druckserver 4 abgespeichert sind, direkt verwendet werden. Ein erneuter Rasterungsprozeß im RIP-Prozessor 3 ist dann nicht mehr nötig. Der RIP-Prozessor 3 kann im übrigen auch im Host-Computer 2 oder im Druckserver 4 integriert sein.
Nach dem Zusammenfügen, Ausschießen und Feinbearbeiten der ausgeschossenen Daten werden diese vom Druckserver 4 an ein Druckgerät 5 gesandt und in diesem auf einen Aufzeichnungsträger 6, und zwar auf eine Papierbahn, gedruckt. Als Druckgerät 5 kann im Prinzip jede Art von Druckgerät verwendet werden. Geeignet sind z.B. Offset-Druckmaschinen oder Druckgeräte, die auf anderen Aufzeichnungsprinzipien wie beispielsweise einem elektrografischen Prinzip beruhen. Beispiele elektrofotografischer Drucker sind in den WO-99/09459 A1 und WO-98/27466 A1 angegeben. Die Daten sowie die angeschlossenen Druckgeräte können sowohl zum monochromen als auch zum mehrfarbigen Druck vorgesehen sein.

Bei dem in Figur 1 dargestellten elekrofotografischen Druckgerät 5 wird die bedruckte Papierbahn 6 einem Papiernachverarbeitungsgerät 7 zugeführt. Dort wird die Papierbahn 6 geschnitten, gefalzt und schließlich zu einem fertigen Druckgut, beispielsweise einem Buch oder einer Broschüre, gebunden. Obwohl dieses Nachverarbeitungsgerät 7 hier als Einheit dargestellt ist, kann es aus mehreren Einzelgeräten, beispielsweise:aus einem Schneidegerät, einem separaten Faltgerät und einer separaten Bindeeinrichtung bestehen. Die Geräte des PoD-Drucksystems 1 sind untereinander durch eine gemeinsame Steuerleitung 8 steuerungstechnisch verbunden. Den Produktionsablauf steuert ein Master-Gerät, beispielsweise der Druckserver 4.

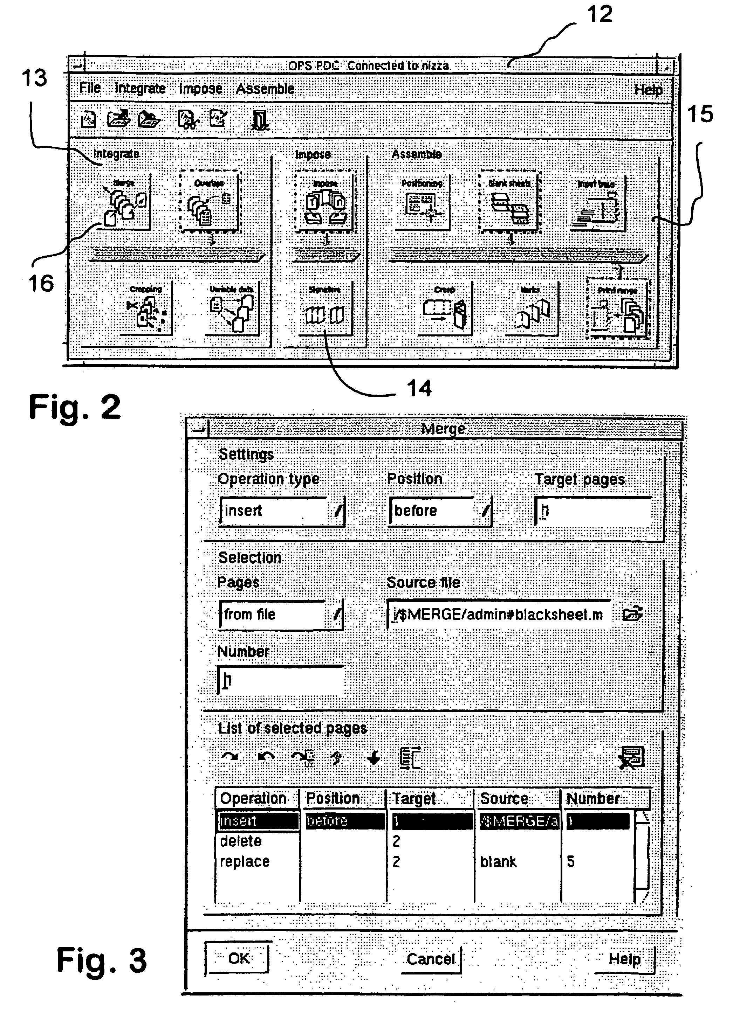

Der Host-Computer 2 ist über das Netzwerk 9 mit diversen Anwender-Computern 10 (Clients) verbunden. Die Clients 10 können Druckaufträge an das PoD-Drucksystem 1 senden. Verbunden mit den Druckaufträgen werden diverse Systemeinstellungen vorgenommen. Diese Systemeinstellungen können entweder im Client 10, im Host 2 oder vorzugsweise im Druckserver 4 erfolgen. Der Arbeitsablauf zur Vornahme der Einstellungen bezüglich des Ausschießens von PoD-Druckdaten wird anhand der Figuren 2 bis 18 genauer beschrieben.

Figur 2 veranschaulicht den Verfahrensablauf (work flow) zur Erstellung eines PoD-gerechten Druckdatenstroms für das Druckgerät 5.

Der Arbeitsablauf wird durch ein Computerprogramm (Software) zunächst gestaltet und dann gesteuert. Das in Figur 2 dargestellte Hauptfenster 12 des ablaufenden Programms ist das Eingangsmenü des ablaufenden Computerprogramms zur Einstellung der Systemparameter, d.h. zur Gestaltung des Ausschießauftrags. Es umfaßt drei work-flow-Symbolfelder 13, 14, 15. Im ersten Symbolfeld 13 "integrate" werden Arbeitsabläufe definiert, die einzelne Daten mischen, überlagern oder ausblenden. Der dem Symbolfeld 13 entsprechende Arbeitsablauf beim späteren. Verarbeiten der Druck-Files führt auf logischer Seitenebene noch vor dem eigentlichen Ausschießen (impose) Manipulationen durch. Im zweiten Symbolfeld 14 "impose" werden Parameter festgelegt, die das Ausschießen der aufbereiteten Druckdatei, d.h. den Aufbau neuer physikalischer Seiten aus jeweils ein oder mehreren logischen Seiten sowie die Umsortierung der Seiten festlegen.

Mit dem dritten Symbolfeld 15 "assemble" besteht die Möglichkeit, den aus "integrate" und "impose" resultierenden Datenstrom auf physikalischer Seitenebene zu bearbeiten. Damit kann zum Beispiel das Seitenlayout nachbearbeitet werden, indem die Positionierung der logischen Seiten oder Bilder (images) verändert, Leerbögen eingefügt oder Marken auf den Bögen plaziert werden.

Jedes der drei Symbolfelder enthält mehrere Schaltflächen, die jeweils neue Fenster zur detaillierten Festlegung von entsprechenden Parametern öffnen.

Figur 3 zeigt das Fenster, welches sich bei Betätigen der Schaltfläche 16 "merge" im Symbolfeld 15 (integrate) öffnet.

Dieses Fenster besteht aus drei Bereichen. Im ersten Bereich "settings" wird die Art der Einfügung, ihre Position und die zu bearbeitenden Seiten des Druckdatenstroms angegeben. Im zweiten Fenster "selection" wird angegeben, welche Quelle mit dem Datenstrom in Verbindung zu bringen ist. Im dritten Feld ist eine Liste der so ausgewählten Seiten und Parameter zu sehen. Die Modifikation von Dokumenten erfolgt dabei auf der Basis der einzelnen Seiten.

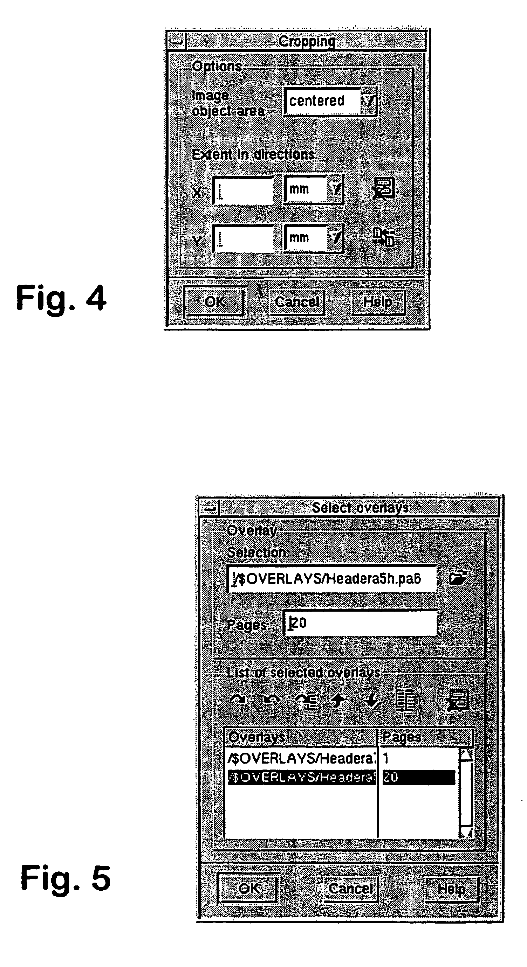

Die Flexibilität des Gesamtsystems erlaubt nicht nur das Zusammenführen bestimmter Dokumentseiten, sondern auch das Einblenden (Überlagern) anderer Dateien in den auszudruckenden Druckdatenstrom. Die entsprechenden Einstellungen werden in dem in Figur 5 dargestellten Fenster vorgenommen. Dabei ist eine Overlay-Datei auswählbar sowie die entsprechenden Seiten des auszudruckenden Dokuments, in denen dieses Overlay überlagert werden soll.

Durch eine solche Einblendung sind sowohl die Ursprungsseite als auch die durch das Overlay vorgegebene Seite (Information) im letztendlichen Druckgut zu sehen.

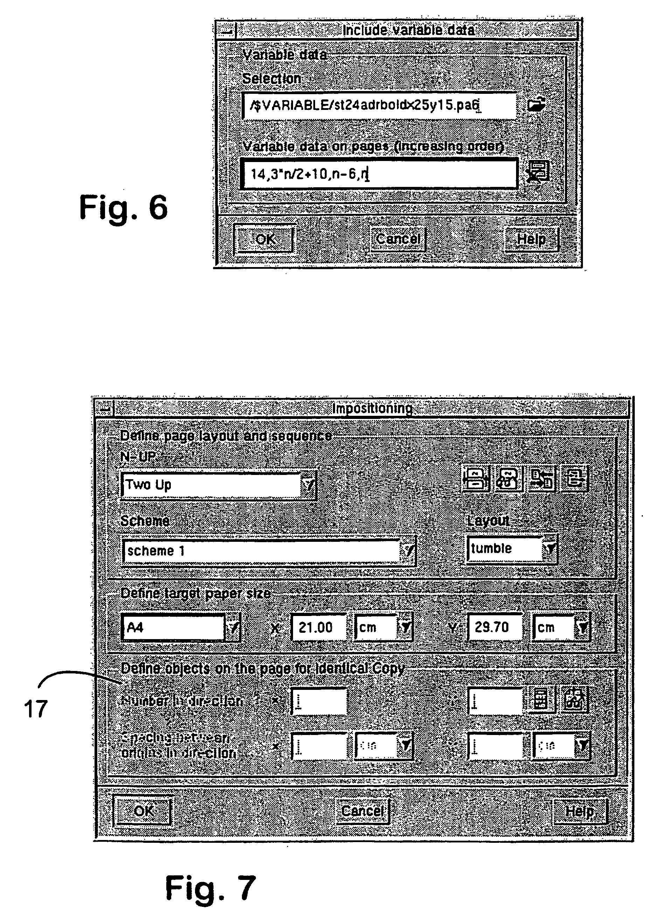

Über die Schaltfläche "cropping" bzw. das in Figur 4 dargestellte Auswahlfenster können Bilder des Druckdatenstroms beschnitten werden, d.h. bestimmte Bereiche in den Seiten des Druckdatenstroms ausgeschnitten werden. In solche ausgeschnittenen Bereiche oder in an sich bereits leere Bereiche der Druckdateien können variable Daten, d.h. Daten aus einer externen Datei (z.B. Adreßdatei) in die Druckdatei selektiv eingebunden werden. Die entsprechenden Einstellungen werden durch das in Figur 6 dargestellte Fenster vorgenommen. Diese Funktionalität erlaubt z.B. einen personalisierten Druck von Druckgut, in dem beispielsweise jeweils auf der ersten Seite des Druckguts, z.B. jedes Buches, eine individuelle, persönliche Widmung eingedruckt wird.

Mit der Schaltfläche "impose" wird die in Figur 7 dargestellte Maske geöffnet. In diesem Fenster können typische Ausschieß-Parameter eingestellt werden wie N-Up (One-Up, Two-Up, Two-Up with identical copies etc.) und Layout (tumble, workand-turn etc.). Ferner können verschiedene, vordefinierte Standard-Ausschieß-Schemata ausgewählt und abgerufen werden. Dazu wird auch das Format des Aufzeichnungsträgers im Drucker (A4, Letter etc.) ausgewählt bzw. angegeben. Falls die Option "Identical Copies" im Bereich "N-Up" gewählt wurde, können über den Bereich 17 ("Define objects...") die Größe und die Position der kopierten Felder eingestellt werden. Diese Druckparameter der identischen Kopien innerhalb einer Seite, z.B. beim Visitenkartendruck, können dadurch optimiert werden.

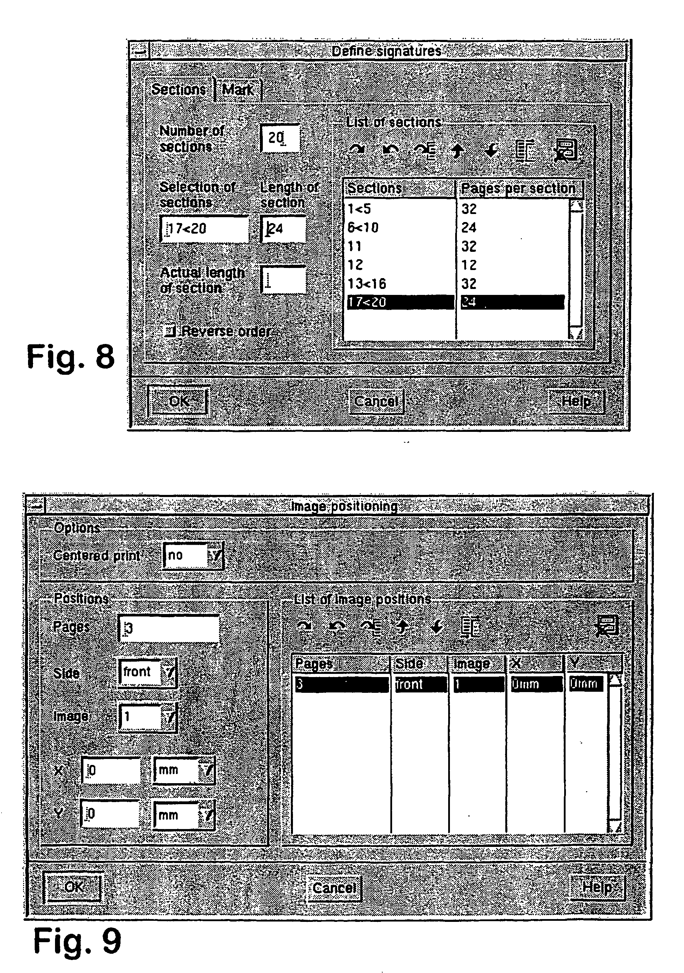

Über die Schaltfläche "Signatures" wird die Signaturen-Einteilung festgelegt. Dies erfolgt in dem in Figur 8 gezeigten Fenster. Über die Registerkarte "sections" erfolgt die Einteilung der Gesamtseitenzahl in Sektionen (Signaturen). Im dargestellten Beispiel sind 20 Sektionen vorgesehen, wobei die Sektionen 17-20 jeweils 24 Seiten umfassen. Die kleinste Sektion (Nr. 12) umfaßt lediglich 12 Seiten. Mit dieser Funktionalität ist es also möglich, den jeweiligen Umfang der Sektionen frei zu wählen. Dies ermöglicht zum einen, die Sektionen, d.h. die Signaturen, dahingehend zu optimieren, daß möglichst wenig Leerseiten zu produzieren sind. Zum anderen können damit kleinere Signaturen, die im gebundenen Zustand weniger stabil sind als größere Signaturen, zentral im Druckgut plaziert werden, so daß das Gesamtwerk im gebundenen Zustand maximale Stabilität hat. Mit der zweiten Registerkarte "mark" lassen sich die Signatur-Marken bestimmen, welche für die späteren Verarbeitungsschritte (Falten, Binden) benötigt werden.

Im work flow wird das Input-File (Datenstrom) entsprechend den eingestellten Signaturen zerlegt. Dadurch entstehen den Signaturen entsprechende, große Druckbögen, die mehrmals gefaltet werden, um dann ein Kapitel des letztendlichen Druckgutes (Buch, Zeitschriften) zu bilden. Für die Signaturen werden standardmäßig 4 bis 96 logische Seiten unterstützt, d.h. meist Vielfache von vier logischen Seiten, wobei in Ausnahmefällen von den beiden vorgenannten Regeln auch abgewichen werden kann.

Mit der Schaltfläche "positioning" im Symbolfeld "assemble" wird das in Figur 9 dargestellte Fenster aktiviert. In diesem Fenster ist ein Druckbogen (sheet) ausnahmsweise als "Page" bezeichnet. Optional kann in diesem Fenster ausgewählt werden, daß die auf einem Druckbogen (sheet) ausgeschossenen Bilder (images) einer Seite zentriert gedruckt werden. Mit dieser Option ist es also möglich, die Bilder, d.h. eine Druckseite, auf einem bahnförmigen Aufzeichnungsträger, z.B. auf Papier, bahnzentriert zu drucken. Diese Option ist insbesondere dann nützlich, wenn das im Druckjob angegebene Aufzeichnungsträger-Format nicht genau mit dem Format des physikalischen Aufzeichnungsträgers übereinstimmt.

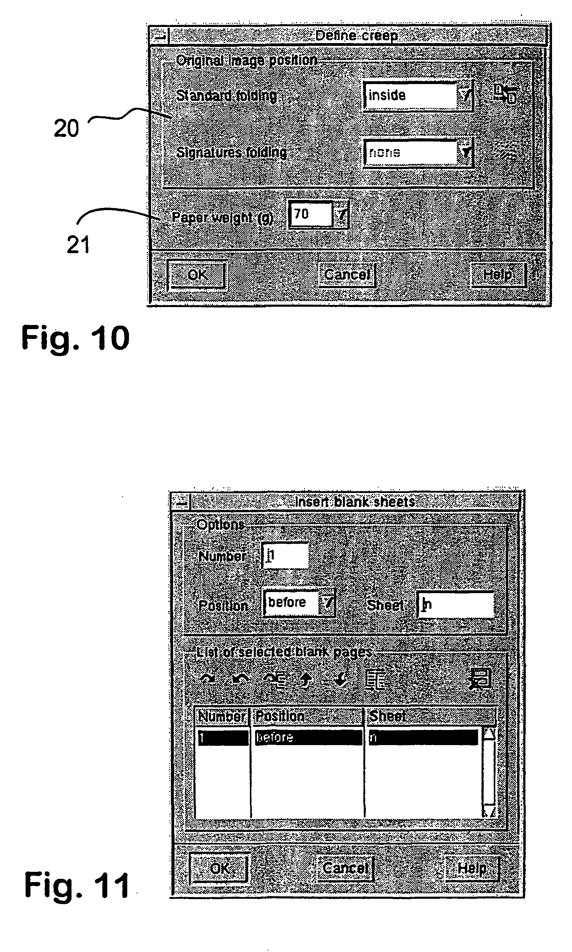

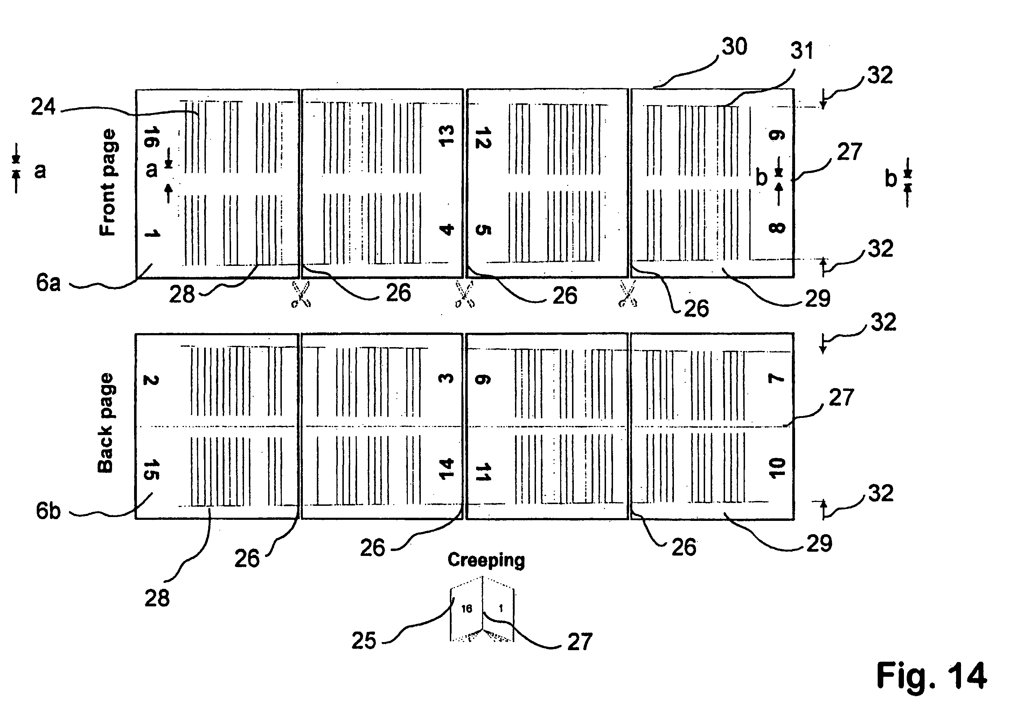

In Figur 10 ist das Eingabefenster dargestellt, mit dem die Parameter zur eingangs beschriebenen Satzspiegelkorrektur bei gefalteten Papierbahnen festgelegt werden. Im Abfragefeld 20 werden Parameter zur Art der Faltung abgefragt. Die Variante "standard folding" wird dann selektiert, wenn Druckbögen nur um eine einzige Kante gefaltet werden. Dies ist zum Beispiel dann der Fall, wenn eine Papierbahn bedruckt wird, die Papierbahn in Einzelbögen geschnitten, die einzelnen Bögen übereinander gelegt und schließlich alle Bögen um eine gemeinsame Kante (Mittelkante) gefalzt und zusammengeheftet werden. Eine Verarbeitungsvariante mit gleichem Ergebnis wäre, daß Einzelbögen (cut sheets) kleineren Formats wie z.B. DIN A4 oder DIN A3 bedruckt werden, dann ebenfalls übereinander gelegt und schließlich um die gemeinsame-Mittelkante gefalzt und geheftet werden. Mit der Option "inside" oder "outside" wird festgelegt, ob die ursprüngliche Seitenpositionierung auf dem inneren Bogen der Signatur oder auf dem äußeren Bogen der Signatur erhalten bleibt. Diese Funktion wird später bei Fig. 14 noch genauer beschrieben.

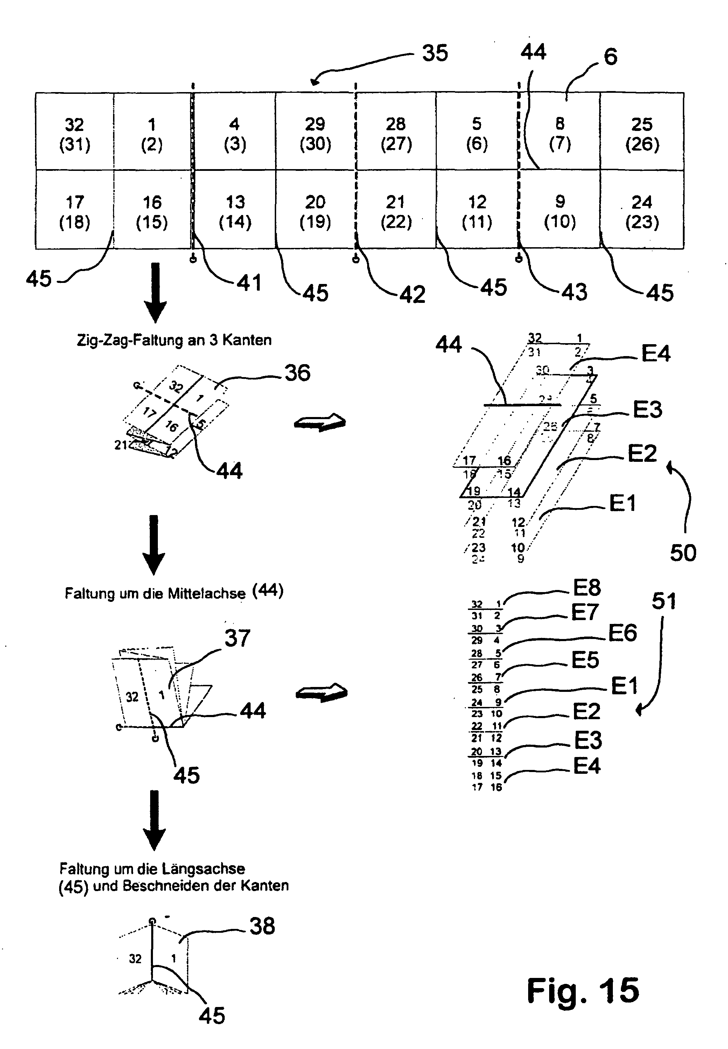

Während die Variante "standard folding" nur für Druckbögen gewählt wird, die um eine einzige Kante gefaltet werden, wird die Variante "signature folding" gewählt, wenn Druckbögen um zwei senkrecht zueinander stehende Achsen gefaltet werden. Diese Variante wird weiter unten anhand von Figur 15 noch eingehend beschrieben.

Mit dem Abfragefeld 21 "paper weight" wird das spezifische Gewicht des Papiers (z.B. 70g/m$^2$) eingegeben. Aus diesem Parameter wird erfindungsgemäß eine Korrekturgröße ermittelt, anhand welcher der individuelle Versatz des Druckbildes auf der Seite bzw. die zur Satzspiegelkorrektur nötigen Größen berechnet werden. Details zu dieser Berechnung werden im Zusammenhang mit den Figuren 14 bis 17 näher beschrieben.

Zusätzlich oder anstatt des Papiergewichts könnten bei einem alternativen Ausführungsbeispiel im Fenster "define creep" weitere Parameter von Aufzeichnungsträgern angegeben werden, beispielsweise die Materialart (Papier, Folie, Stoff), die Dicke des Aufzeichnungsmaterials oder dgl. Des weiteren kann vorgesehen sein, diese Angaben einer bestimmten Signatur (z. B. Signatur Nr. 12 in Figur 8) zuzuordnen und/oder eine entsprechende Zuordnung zu einem von mehreren angeschlossenen Druckgeräten zu treffen.

Das in Figur 11 dargestellte Eingabefenster zu "blank sheets" erlaubt Eingaben, mit denen an bestimmten Positionen vor oder nach Druckbögen (sheets) Leerbögen eingefügt werden können. Im laufenden Druckbetrieb kann dies insbesondere mit einer Anordnung erfolgen, die in der EP 741 877 B1 bzw. in der dieser entsprechenden WO-A-95/20185 beschrieben ist. Mit dem dort in Figur 1 gezeigten Zwischenspeicher ist auch eine externe Beschickung (EB) vorgesehen, durch die zum Beispiel gefärbte oder anderweitig vorbedruckte Trennbögen in den vom PoD-Druckgerät bedruckten Druckbogenstrom einfügbar sind, bevor die unterschiedlichen Bögen eines Dokuments zusammengeführt und zu dem Dokument gebunden werden.

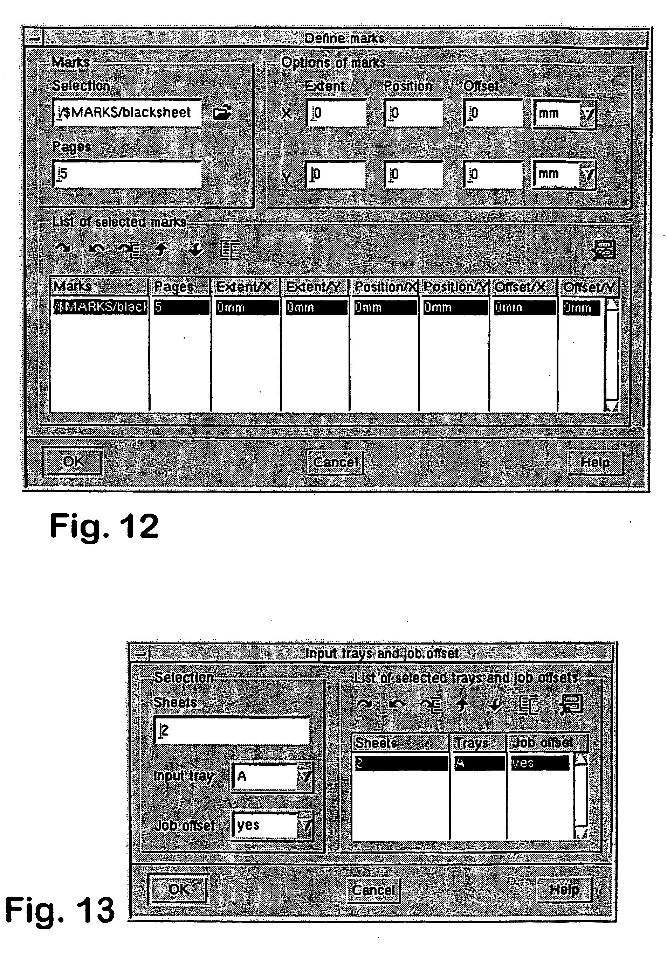

Mit dem in Figur 12 angegebenen Eingabefenster können Marken an bestimmten Seiten der ausgeschossenen Druckdaten angebracht werden, beispielsweise Schneidemarken, End-Of-Job-Marken oder andere, anwenderspezifische Marken.

Mit dem in Figur 13 dargestellten Eingabefenster lassen sich Papiereinzugsfächer auswählen sowie eine Jobversatz-Funktion druckbogenweise aktivieren. Diese Auswahlfunktionen sind insbesondere bei der Ausgabe mit Einzelblattdruckgeräten relevant. Durch die Jobversatz-Funktion ist es möglich, die individuellen Bögen (Signaturen) Signaturen- bzw. jobweise zu sortieren und damit ggf. eine manuell oder maschinell ausgeführte Zusammentragfunktion effizient zu unterstützen.

Mit der in Figur 2 gezeigten Schaltfläche "print range" ist es möglich, einen Druckbereich festzulegen und alternativ zu einer kompletten Druckdatei nur einen Teilbereich der Datei zu drucken. Dies ist insbesondere für einen Prüfdruck (proof) von Vorteil. Dadurch können kritische Teilbereiche, z.B. das Ausdrucken individualisierter Bereiche des Druckauftrags oder die Überlagerung (overlay) von verschiedenen Seiten getestet werden.

In Figur 14 ist eine bedruckte Papierbahn dargestellt, auf der doppelseitig bedruckt ein "two up"-Muster abgedruckt ist. Die Vorderseite 6a der Papierbahn trägt die Seitennummern 1, 4, 5, 8, 9, 12, 13 und 16 und die Rückseite 6b der Papierbahn trägt die Seitennummern 2, 3, 6, 7, 10, 11, 14 und 15. Geht man davon aus, daß aus diesen 16 Seiten eine Signatur 25 gebildet wird, indem die Papierbahn jeweils an den Schnittkanten 26 zu Bögen geschnitten, aufeinanderfolgende Bögen übereinander gelegt und schließlich um den gemeinsamen Mittelfalz 27 gefaltet werden, so muß folgende Bedingung erfüllt sein, damit aufeinander folgende Seiten passergenau übereinander zu liegen kommen, d.h. eine Passerkorrektur bei Standard-Folding durchgeführt wird:

Die logischen Druckseiten mit den Nummern 1, 2, 15 und 16 des äußeren Bogens 28 der Signatur 25 müssen am weitesten außen auf der Papierbahn plaziert werden, während die logischen Seiten - je weiter die Bögen in der gefalteten Signatur 25 innen liegen - weiter nach innen zum Mittelfalz 27 hin positioniert werden müssen. Mathematisch gilt somit:

$$a > b,$$

wobei a den Abstand des Druckbilds der Seiten des äußeren Bogens vom Mittelfalz und b den Abstand des Druckbilds der Seiten des inneren Bogens 29 vom Mittelfalz 27 bezeichnen.

Eine Wirkung dieser Satzsspiegelkorrektur (Creep-Funktion) ist, daß der äußere Rand 31 des Druckbilds 24 vom seitlichen Rand 30 der Papierbahn 6 vom äußeren Bogen zum inneren Bogen hin zunimmt. Die Verschiebung der Druckbilder erfolgt somit in Richtung der in Figur 14 angegebenen Zeile 32. Mit den Parametern "inside" bzw. "outside" im Abfragefeld 20 (Figur 10) wird festgelegt, ob die ursprüngliche Seitenpositionierung auf dem inneren Bogen 29 oder auf dem äußeren Bogen 28 der Signatur 25 erhalten bleiben soll. Entscheidet sich der Anwender für die Option "inside", so wandern die logischen Seiten - ausgehend vom inneren Bogen 29 - weiter nach außen entgegen der Pfeilrichtung 32. Wird die Option "outside" gewählt, so bleibt die Originalposition des Druckbilds 24 auf dem äußeren Bogen 28 erhalten und auf allen anderen Bögen werden die Druckbilder in Pfeilrichtung 32 nach innen zum Mittelfalz 27 hin verschoben.

Zur Berechnung der bogenweisen Druckbildverschiebung wird aus den in Figur 10 angegebenen Parametern (spezifisches Papiergewicht) auf die Papierdicke geschlossen, eine Schrittweite für die Druckbildverschiebung pro Bogen berechnet und für jede Seite des Bogens ein individueller Korrekturshiftwert bestimmt. Dazu wird folgender Algorithmus angewandt (Algorithmus 1):

```
if (inside)
        pweights_init = 0 - pweight * sheet_ges -1
else
        pweights_init = 0
Korrekturshiftwert = (pweights_init + pweight *(lage
- 1)) / a * lunits * (dpi / STD_MPI),
```

wobei gilt:

a = ein empirisch ermittelter Parameter für eine bestimmte Papiersorte; für ein Standard-Papier mit einem spezifischen Gewicht von 80 $g/m^2$ hat sich z. B. ein Faktor a = 500 als günstig erwiesen,

sheets_ges = Anzahl der Druckbögen

pweight = Papiergewicht in Gramm/$m^2$ (z.B. pweight = 80) (falls "inside" => negatives Vorzeichen, also: -80)

lage = Seitenlage im Bogen, berechnet nach Algorithmus 2

lunits = 1 lunit/pel

dpi = aktuelle Auflösung, z.B. 600 pel/inch

STD_MPI = 25.4 mm/inch.

Statt der Angabe des spezifischen Gewichts und des entsprechend hinterlegten Wertes der Größe "a" kann die Papierdicke in einer Tabelle hinterlegt werden. Für jeden Bogen und der auf dem Bogen befindlichen, logischen Seiten wird dann ein entsprechender Shiftwert ermittelt. Statt der Berechnung des Shiftwertes ist es auch möglich, den Shiftwert vom Anwender auszuwählen bzw. einzugeben. In Abhängigkeit von der Seitennummer wird die Bogennummer bzw. die Lage der Seite im gefalteten Bogen ermittelt. Im Falle des "Standard-Foldings" sind alle Bögen um den Mittelfalz (27) gefaltet. Die Ermittlung des Parameters "lage" erfolgt dann nach folgendem Algorithmus (Algorithmus 2):

```
if
(page_nr <= pages_ges/2 und page_nr geradzahlig)
```

then → lage = page_nr/2
else if
(page_nr <= pages_ges/2 und page_nr ungeradzahlig)
    then → lage = (page_nr + 1)/2
else if
(page_nr > pages_ges und page_nr geradzahlig)
    then → lage = (2 * pages_ges/2 - page_nr + 2) / 2
else if
(page_nr > pages_ges und page_nr ungeradzahlig)
    then → lage = (2 * pages_ges/2 - page_nr + 1) / 2,

wobei gilt:

(page_nr) = Seitennummer und
(pages_ges) = Gesamtzahl der Seiten.

Die so ermittelte Lage ist im Algorithmus 1 der Multiplikator für den Korrekturshift-Wert der entsprechenden Seite.

Beispiel zur Berechnung des Korrekturshifts nach den beiden beschriebenen Algorithmen:

Standard folding: "inside"
Paper weight (g/m$^2$) : 80
Signatur und Seitenverteilung wie in Fig. 14

→ pweight = -80
→ sheets_ges = 4
→ pweights_init = 0 - (-80 * (4 - 1)) = 240
→ Korrekturshift = (240-80 * (lage -1)) / 500 * 600/25.4

lage = 1: Korrekturshiftwert = 0.48 mm (11 lunits)
lage = 2: Korrekturshiftwert = 0.32 mm ( 8 lunits)
lage = 3: Korrekturshiftwert = 0.16 mm ( 4 lunits)
lage = 4: Korrekturshiftwert = 0.00 mm ( 0 lunits)

In Figur 15 ist ein Ausschießschema 35 für einen Signaturendruck dargestellt, bei dem Faltungen in zueinander senkrechten Faltachsen erfolgen. Das Ausschießschema 35 umfaßt 32 logische Seiten, wobei die Nummern der Seiten, welche auf der Vorderseite der Papierbahn 6 gedruckt werden, ohne Klammern bezeichnet sind, und die Nummern der Seiten, welche auf der Rückseite der Papierbahn gedruckt werden, mit Klammern versehen sind. Die Seite 1 ist also auf der Vorderseite gedruckt, während die Seite 2 auf der Rückseite gedruckt ist.

Die Signatur bzw. der dieser Signatur zugeordnete Druckbogen umfaßt 32 Seiten. Der Faltvorgang erfolgt in mehreren Schritten, wobei das Faltergebnis durch die Lesefolge des fertigen Druckguts (Seitenreihenfolge 1, 2, 3, .... 32) bereits im voraus feststeht. Hieraus ergibt sich, daß der Faltvorgang ein eindeutig beschreibbarer Vorgang ist. Bei dem in Figur 15 gezeigten Beispiel kann der Vorgang in drei Teilschritte untergliedert werden.

Im ersten Teilschritt erfolgt eine Zick-Zack-Faltung an den drei Faltkanten 41, 42 und 43. Dieser Vorgang führt zum gefalteten Druckbogen 36. Wird dieser Druckbogen 36 um die Faltachse 44 gefaltet, so entsteht im zweiten Teilschritt der gefaltete Druckbogen 37. Dieser wird im dritten Teilschritt um die Mittelfalzachse 45 gefaltet und an den übrigen Achsen beschnitten, wodurch die Signatur 38 entsteht.

Die soeben beschriebenen Faltungsvorgänge lassen sich logisch abstrahiert wie folgt beschreiben:

In einem n-dimensionalen Raum ordne man die logischen Seitennummern entsprechend ihren Positionen auf dem Aufzeichnungsträger und seinem Faltzustand an. Befinden sich z.B. bei einem Two-Up-Druck alle Seiten der Papierbahn in einer Ebene (level) entsprechend der Situation während des Druckens, so ist der Raum vierdimensional entsprechend der Vorder- bzw. Rückseite des Aufzeichnungsträgers und je einer Reihe und einer Spalte. Mit bestimmten Faltungsoperationen erhöht sich die Dimension zumindest bereichsweise. Beispielsweise verdoppelt sich die Dimension durch eine Faltung für alle diejenigen Positionen, die aufeinandergefaltet werden.

Am Beispiel der Figur 15 ist zu sehen, daß sich der Raum mit dem ersten Teilschritt, d.h. mit der Zick-Zack-Faltung, auf eine Dimension 16 vervielfacht. Die logische Seitenanordnung ist in dem Diagramm 50 dementsprechend mit vier Ebenen E1, E2, E3 und E4 mit je zwei Seiten (Vorder-/Rückseite) je einer Reihe und je einer Spalte angegeben. Nach der Faltung um die Mittelachse 44 ergibt sich dann die Ebenenstruktur 51, welche exakt die doppelte Anzahl von Ebenen wie die Ebenenstruktur 50 hat, nämlich 8 Ebenen mit je zwei Seiten. Der zu beschreibende Raum ist demnach 32-dimensional.

Eine solche, logische Ebenenstruktur läßt sich datentechnisch durch entsprechende Tabellen oder Variablen mit Adressen (Pointern) ohne weiteres abbilden. Dementsprechend kann die physikalische Faltung von Druckbögen datentechnisch ohne weiteres simuliert werden.

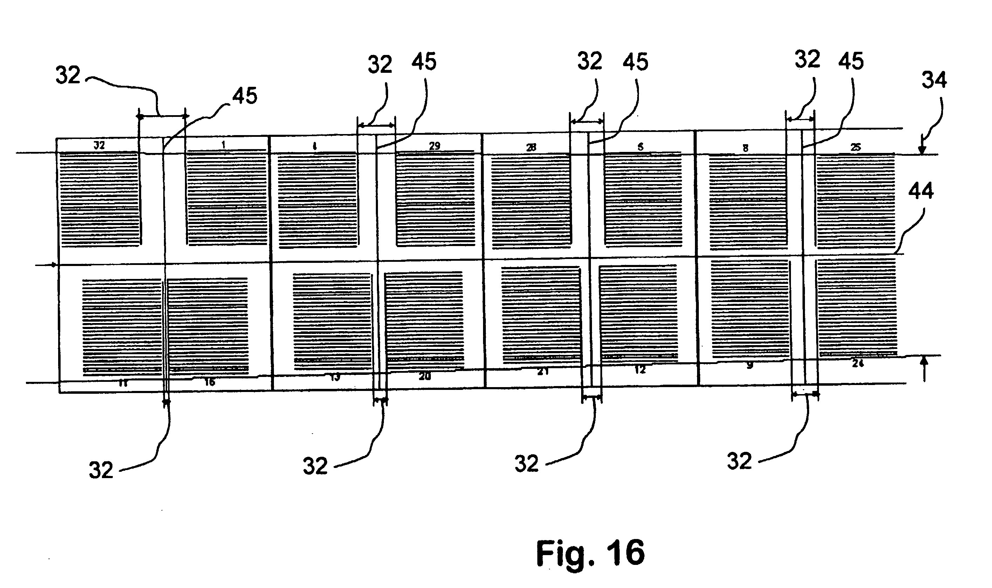

Wie in Figur 16 dargestellt ist, kann aus den simulierten Faltungen und der Kenntnis der Papierbahndicke eine faltungsbedingte Positionsverschiebung der Druckseiten innerhalb einer Signatur nachvollzogen und damit auch korrigiert werden. Diese Positionskorrektur erfolgt dann nicht nur entlang einer Achse wie in Figur 14, sondern auch entlang einer zweiten, zur ersten Achse senkrechten Faltachse. Während - wie bereits in Figur 14 - die Druckbildverschiebungen entlang den Pfeilen 32 entsprechend der Faltung zur Mittelfalzachse 45 erfolgt, sind bei der in Figur 16 dargestellten Signaturenfaltung dazu senkrechte, zusätzliche Druckbildverschiebungen entlang Pfeil 34 und entsprechend der Signaturenfaltung um die Faltachse 44 vorgesehen.

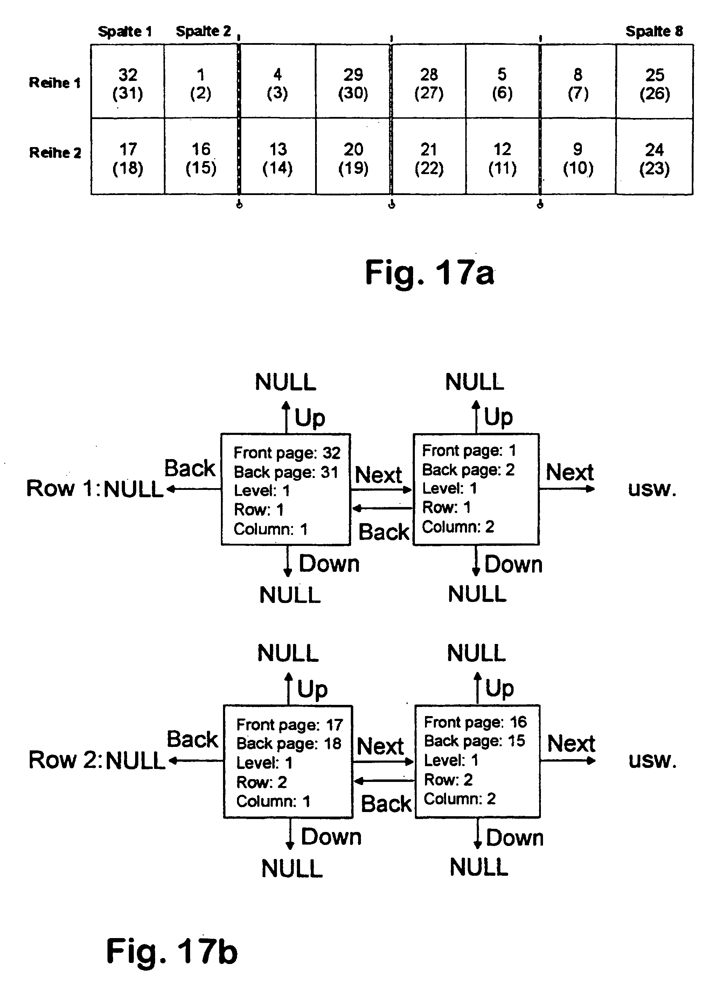

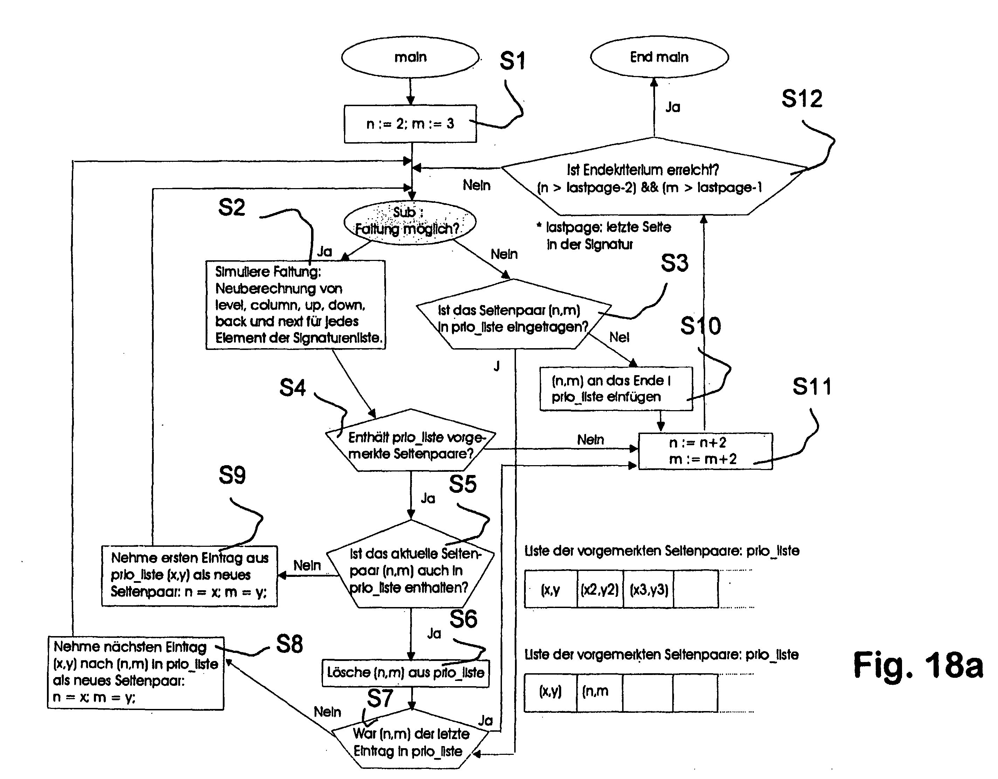

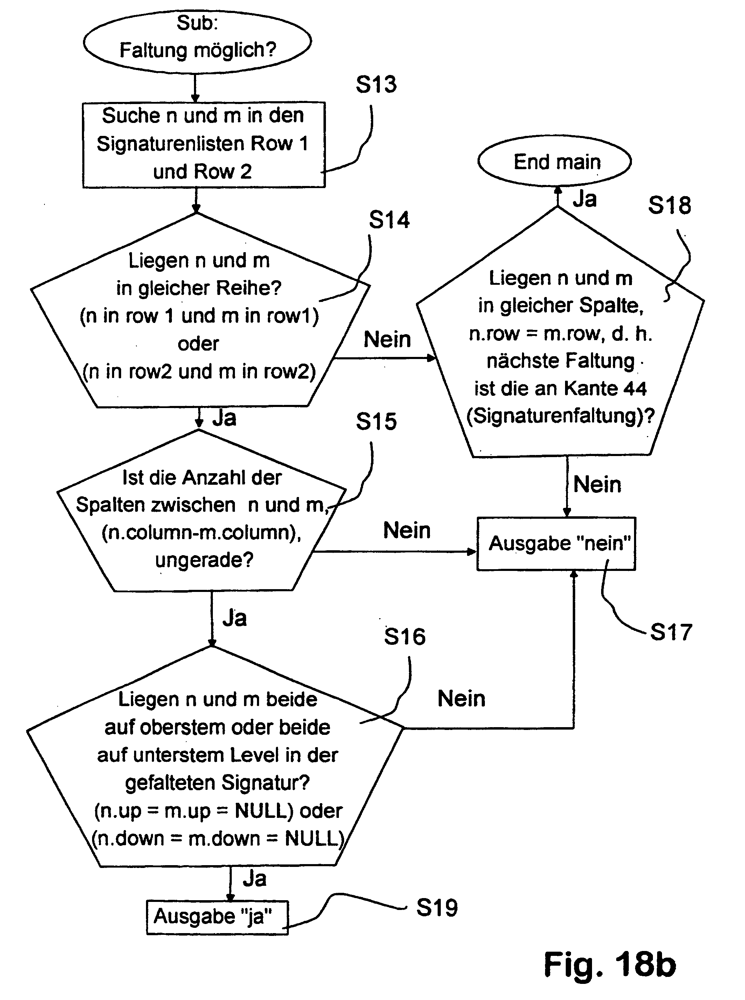

Anhand der Figuren 17 und 18 wird nun der Algorithmus beschrieben, mit dem die Verteilung der Seiten, die Struktur des mit Seiten befüllten Bogens aufgebaut und Schritt für Schritt die Faltung simuliert werden kann. Aus dieser Simulation ist dann bekannt, welche Wirkung die jeweilige Faltung hat. Damit ist eine Positionskorrektur der Druckseiten Faltung für Faltung durchführbar.

Der Algorithmus geht von der Verteilung der Seiten auf der Papierbahn aus, welche durch die Ausschießsequenz (d.h. dem im Arbeitsschritt "impose" vorgegebenen Parameterset) bekannt ist. Die Figuren 17a und 17b zeigen den Ausgangszustand des ungefalteten Bogens, wobei Figur 17a den physikalischen Bogen zeigt und Figur 17b das entsprechende, mit logischen Variablen (Front page, Back page, Level, Row, Column, Up, Down) bzw. Zeigern ausgestattete logische und computertechnisch umsetzbare Faltmodell in Form einer Listenstruktur für die Signatur.

Ausgehend von dem in Figuren 17a und 17b dargestellten Zustand wird gemäß Figur 18a sukzessive festgestellt, welches Seitenpaar als nächstes aufeinander gefaltet werden soll. Im Schritt S1 wird dazu ein Zähler n mit 2 und ein Zähler m mit 3 vorbelegt, entsprechend der zweiten und dritten Seite. Anschließend wird das Unterprogramm "Faltung möglich?" gestartet, vgl. Figur 18b.

Dort wird zunächst im Schritt S13 nach den Seiten n und m in den beiden Reihen Row1 und Row2 gesucht. Anschließend werden nacheinander drei Kriterien abgeprüft. Im Schritt S14 wird geprüft, ob die beiden aufeinander zu faltenden Seiten in der gleichen Reihe liegen. Falls nicht, wird als nächstes im Schritt S18 festgestellt, ob die beiden Seiten n und m in der gleichen Spalte liegen. Falls dies zutrifft, wird das Programm beendet, da es sich bei der nächsten Faltung um die Signaturenfaltung (Kante 44) um die zweite Achse (senkrecht zu allen bisherigen Faltungsachsen stehend) handelt. Im anderen Fall erfolgt eine Ausgabe "nein" (Schritt S17), die beiden Seiten können nicht gefaltet werden, da sie weder in der gleichen Reihe (Schritt S14) noch in der gleichen Spalte liegen (Schritt S18).

Wird die Abfrage in Schritt S14 bejaht, so wird als nächstes die Differenz zwischen den beiden Spaltennummern der Seiten n und m gebildet (Schritt S15). Falls die Differenz einen ungeraden Wert ergibt, kann mit Schritt S16 fortgefahren werden, ansonsten erfolgt die Ausgabe "nein" (Schritt S17). Schritt S16 stellt fest, ob die Seiten n und m beide auf unterster Ebene (Level) oder oberster Ebene in der gefalteten Signatur liegen sowie ob beide Seiten eine Vorderseite oder eine Rückseite sind. Ist dies der Fall, so können die Seiten im aktuellen Schritt aufeinander gefaltet werden und es erfolgt eine Ausgabe "ja" (Schritt S19). Sonst wird "nein" ausgegeben (Schritt S17).

Erfolgt die Rückkehr des Unterprogramms "Faltung möglich?" in das Hauptprogramm (Fig. 18a) mit der Ausgabe "nein", so wird dort geprüft, ob das aktuelle Seitenpaar auch als Eintrag in der Liste der vorgemerkten Seitenpaare existiert (Schritt S3). Ist dies nicht der Fall so wird das aktuelle Seitenpaar an das Ende der Liste vorgemerkter Seitenpaare "prio_liste" eingetragen (Schritt S10) und im Schritt S11 der Seitenzähler für beide Elemente des Seitenpaares (n,m) um einen Offset von 2 erhöht. Sonst wird mit Schritt S7 fortgefahren.

Erfolgt die Rückkehr aus dem Unterprogramm (Fig. 18b) in das Hauptprogramm (Fig. 18a) dagegen mit dem Parameter "ja", so wird im Hauptprogramm das Aufeinanderfalten des Seitenpaares simuliert und die Signaturenliste (Fig. 17b) aktualisiert (Schritt S2). In den folgenden Schritten muß ein neues Seitenpaar ermittelt werden, für welches eine Faltung versucht werden soll. Hierzu wird geprüft, ob in der Liste für vorgemerkte Seitenpaare Einträge vorhanden sind (Schritt S4). Ist dies der Fall, so wird ferner geprüft, ob auch schon das aktuelle Seitenpaar (n,m) in dieser Liste enthalten ist (Schritt S5). Wenn ja, so kann dieses nun aus der Liste entfernt werden (Schritt S6), da es erfolgreich gefaltet werden konnte (in Schritt S2). Ist das Paar (n,m) nicht in prio_liste enthalten, wird das erste Seitenpaar in der Liste zum neuen aktuellen Seitenpaar, für das eine Faltung versucht wird (Schritt S9). Trifft die Abfrage in Schritt S4 nicht zu, so wird mit Schritt 11 fortgefahren.

Ist das Paar (n,m) Element der prio_liste gewesen (Schritt S5, S6), so wird nun im Schritt S7 festgestellt, ob es am Ende dieser Liste stand. Wenn nicht, so wird das nächste Seitenpaar nach (n,m) in der Liste zum neuen aktuellen Seitenpaar (Schritt S8). Wird die Abfrage in Schritt S7 jedoch bejaht, wird im Schritt 11 der Seitenzähler für beide Elemente des Seitenpaares (n,m) um einen Offset von 2 erhöht. Dabei muß in Schritt 12 immer geprüft werden, ob die Werte für n und m schon außerhalb der Signatur liegen (n > Gesamtzahl der Seiten- 2, m > Gesamtzahl der Seiten - 1). In diesem Fall beendet sich das Simulationsprogramm, ansonsten wird für das neue Seitenpaar (n,m) erneut eine Faltung versucht.

Da die Gesamtzahl der Seiten auf dem Bogen bekannt ist, wird so lange zu falten versucht, bis keine Faltung mehr möglich ist, d.h. entweder der Bogen ist fertig gefaltet (Faltung um Achse 44 ist erreicht) oder das Programm stellt fest, daß die Seiten auf dem Bogen so angeordnet sind, daß keine weitere Faltung mehr möglich ist. In diesem Fall wird eine Fehlermeldung ausgegeben.

Für jede Seite wurde die Lage im gefalteten Bogen errechnet. Abhängig von dieser Lage und der Papierstärke (abgeleitet vom Papiergewicht, das zuvor eingegeben wurde) berechnet sich die Shift-Korrektur für die Signaturenfaltung für jede einzelne Seite.

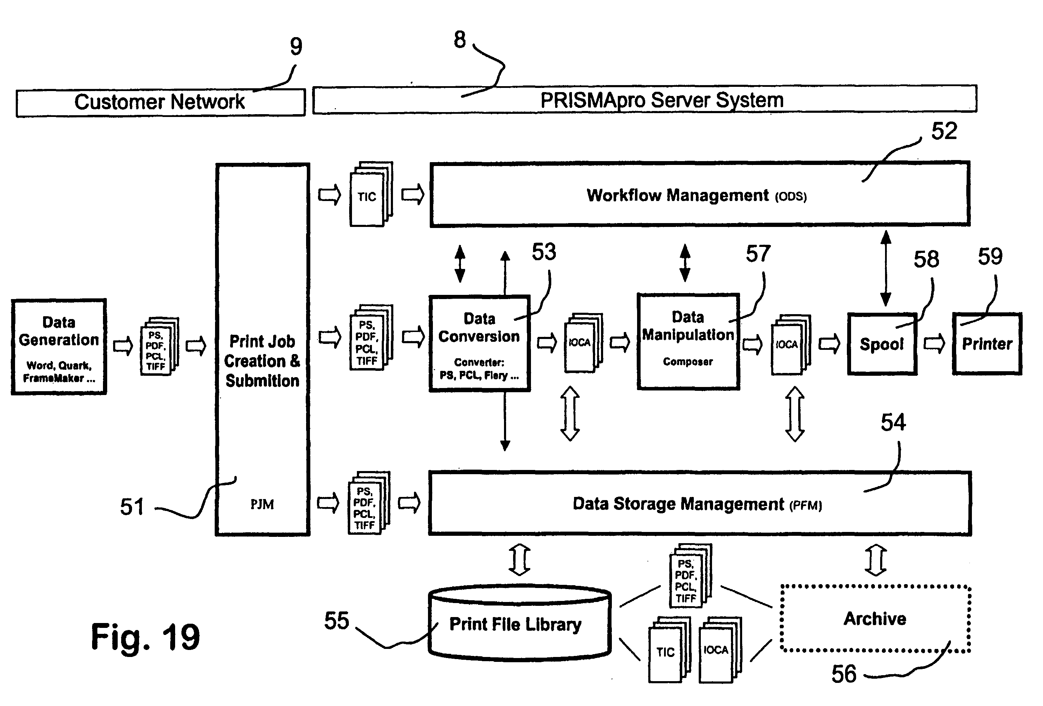

In Figur 19 ist nochmals ein Überblick über den datentechnischen Arbeitsablauf (Work Flow) eines erfindungsgemäßen Systems gemäß der Figur 1 dargestellt. Die in einem ersten Netzwerk 9 (Customer Network) erzeugten Daten (PS, PDF,...) z.B. aus den Programmen Microsoft Word (eingetragene Marke der Firma Microsoft Inc.), Quark (eingetragene Marke der Firma Quark Inc.) oder Frame Maker (eingetragene Marke der Firma Adobe Systems Inc.) werden dabei entweder noch innerhalb des Netzwerks 9 oder bereits in einem Druckumgebungs-Netzwerk 8 einem Print Job Manager 51 (PJM) zugeführt. Dieser erzeugt zunächst druckjobspezifische Daten und Befehle wie Drucker-Identifikation, Jobklasse etc.. Dann sendet er einerseits Steuerungsdaten (TIC) an ein Steuerungsprogramm 52 (Order Distibution System ODS) und andererseits die Druckdaten (PS, PDF,...) an einen Datenkonverter 53, z.B. an den in Fig. 1 gezeigten RIP 3. Optional kann er die Druckdaten auch an ein Datenspeicherungssystem 54 (Print File manager PFM) senden, welches Druckdateien der verschiedensten Formate in einem Print File Library 55 verwalten und die Dateien bei Bedarf an ein externes Archivierungssystem 56 senden kann, z.B. an ein sogenanntes COLD-System zur Speicherung auf einer CD-ROM.

Die im Datenkonverter zu einem neuen Datenstrom (IOCA) konvertierten Druckdaten werden dann dem Composer 57 Zugeführt, in dem das Ausschießschema festgelegt wird und die übrigen in Zusammenhang mit den Figuren 2 bis 18 beschriebenen Schritte zum Verändern des Druckdatenstroms vorgenommen werden können. Die derart angepaßten Druckdaten werden dann einem Druckdatenspooler 58 zugeführt, der eine Schlange (queue) bildet und die Druckdaten schließlich an den Drucker 59 (vgl. den Drucker 6 der Fig. 1) sendet. Das Order Distibution System 52 steuert die Vorgänge in den Modulen 53, 57 und 58 systemübergreifend.

Es wurden Ausführungsbeispiele der Erfindung beschrieben. Dabei ist klar, daß beliebige Weiterentwicklungen und auch Abwandlungen möglich sind. Beispielsweise können neben den bereits beschriebenen Parametern zur Durchführung der Satzspiegelkorrektur weitere, durch Nachverarbeitungsgeräte wie Falzeinrichtungen oder Bindeeinrichtungen bewirkte Einflußgrößen (Parameter) in die Körrekturberechnung einbezogen werden. Auch solche Parameter können auswählbar vordefiniert sein.

Die Erfindung ist insbesondere dazu geeignet, in einem Computerprogramm (Software) umgesetzt zu werden. Sie kann somit in Gestalt eines Computerprogramm-Moduls, als Datei auf einem Datenträger wie einer Diskette oder einer CD-ROM oder als Datei über ein Daten- bzw. Kommunikationsnetz verbreitet werden. Derartige und vergleichbare Computerprogramm-Produkte sind Ausgestaltungen der Erfindung. Der erfindungsgemäße Ablauf kann in einem Computer, in einem Druckgerät oder in einem Drucksystem mit nachgeschalteten Verarbeitungsgeräten Anwendung finden. Dabei ist klar, daß der Computer, auf dem das Programm abläuft, an sich bekannte technische Einrichtungen wie Eingabemittel (Tastatur, Maus, Touch-Screen), einen Mikroprozessor, einen Daten- und Steuerbus, eine Anzeigeeinrichtung (Monitor, display) sowie einen Arbeitsspeicher, einen Festplattenspeicher und eine Netzkarte enthalten kann.

**Bezugszeichenliste**

| 1 | PoD-Drucksystem |
| 2 | Host-Computer |
| 3 | RIP-Prozessor |
| 4 | Druckserver |
| 5 | Druckgerät |
| 6 | Papierbahn |
| 6a | Vorderseite der bedruckten Papierbahn |
| 6b | Rückseite der bedruckten Papierbahn |
| 7 | Nachverarbeitungsgerät |
| 8 | Steuerungsleitung |
| 9 | LAN/WAN |
| 10 | Client |
| 12 | Hauptfenster |
| 13 | Integrate-Symbolfeld |
| 14 | Impose-Symbolfeld |
| 15 | Assemble-Symbolfeld |
| 16 | Merge-Schaltfläche |
| 17 | Define-Objects-Bereich |
| 20 | Creep-Foldingabfragefeld |
| 21 | Papiergewicht-Abfragefeld |
| 24 | Druckbild |
| 25 | Signatur |
| 26 | Schnittkanten |
| 27 | Mittelfalz |
| 28 | äußerer Bogen |
| 29 | innerer Bogen |
| 30 | seitlicher Rand der Papierbahn 6 |
| 31 | äußerer Rand des Druckbildes 24 |
| 32 | Richtungen der Druckbildverschiebung |
| 34 | Signaturen-Druckbildverschiebung |
| 35 | Signaturen-Ausschießschema |
| 36 | Erster gefalteter Druckbogen |
| 37 | Zweiter gefalteter Druckbogen |
| 38 | Signatur |
| 41 | erste Faltachse |
| 42 | zweite Faltachse |
| 43 | dritte Faltachse |
| 44 | vierte Faltachse |
| 45 | fünfte Faltachse |
| 50 | Ebenen-Struktur |
| 51 | Print Job Manager |
| 52 | Order Distribution System |
| 53 | Datenkonverter |
| 54 | Print File Manager |
| 55 | Print File Library |
| 56 | Archiv |

57    Composer
58    Spooler
59    Druckgerät

a=    Abstand des Druckbildes der Seiten des Äußeren Bogens 28 vom Mittelfalz 27
b=    Abstand des Druckbilds der Seite des inneren Bogens 29 vom Mittelfalz

**Patentansprüche**

1.  Verfahren zum signaturenweisen Aufbereiten von Druckdaten, bei dem
    die Druckdaten in einer logischen, mindestens einer Signatur (25) entsprechenden Seitenfolge zum Drucken auf einem Aufzeichnungsträger (6) bereitgestellt werden, wobei die Signatur einen Abschnitt eines Druckerzeugnisses bildet und mehrere Seiten enthält,
    mindestens ein Parameter des Aufzeichnungsträgers (6), auf dem die Druckdaten gedruckt werden, bestimmt wird, der für die Position des Druckbildes auf dem signaturenweise gefalteten Aufzeichnungsträger (6) relevant ist
    und bei dem in Abhängigkeit von dem Parameter vor dem Drucken eine Positionskorrektur des jeweiligen Druckbildes auf den Seiten durchgeführt wird, wobei die zum Erzeugen der Signatur (25) notwendigen Faltungen des Aufzeichnungsträgers (6) rechnerisch mit Hilfe eines Computerprogramms simuliert werden, so daß die Druckbilder aufeinanderfolgender Seiten der gefalteten Signatur passergenau übereinander liegen, **dadurch gekennzeichnet, daß** die Druckdaten auf einem bahnförmigen Träger bereitgestellt werden, und daß die Faltungen in zwei zueinander senkrechten Richtungen erfolgen und wobei die Korrektur in den zwei zueinander senkrechten Richtungen erfolgt.

2.  Verfahren nach Anspruch 1, wobei zur Positionskorrektur die Faltungen der Signatur (25) rechnerisch simuliert werden und aus der Auswirkung jeder Faltung auf das Druckbild mindestens einer Seite die Korrekturwerte für das Druckbild dieser Seite berechnet werden.

3.  Verfahren nach Anspruch 2, wobei die Faltungen seitenweise mit auf,- oder absteigender Seitennummer simuliert werden, wobei jeweils Paare aufeinanderfolgender Seitennummern gebildet werden, die signaturbedingt durch eine Faltung aufeinander zu liegen kommen und/oder zwischen denen signaturbedingt eine Faltung vorgesehen ist.

4.  Verfahren nach Anspruch 3, wobei sukzessive abgeprüft wird, ob eine physikalische Faltungsmöglichkeit des Aufzeichnungsträgers (6) vorhanden ist, durch die die Seiten eines Seitenpaars aufeinanderfolgender Seiten nach dem Falten des Aufzeichnungsträgers (6) zur Signatur in Lesereihenfolge angeordnet sind, wobei bei vorhandener Faltungsmöglichkeit eine datentechnische Faltung durchgeführt wird und im Falle der physikalischen Nichtfaltbarkeit das Seitenpaar in eine Liste aufgenommen wird.

5.  Verfahren nach Anspruch 4, wobei die in der Liste vorhandenen Seitenpaare mit Priorität vor den übrigen Seitenpaaren bearbeitet werden, bis ein nicht faltbares Seitenpaar in der Liste bearbeitet wird.

6.  Verfahren nach einem der vorhergehenden Ansprüche, wobei als Parameter die Dicke des Aufzeichnungsträgers (6) erfaßt wird.

7.  Verfahren nach einem der vorhergehenden Ansprüche, wobei alle zusammengehörenden Signaturen (25) des bedruckten Aufzeichnungsträgers (6) zu einem Druckgut gebunden werden.

**Claims**

1.  Method of editing print data signature-wise, in which the print data are provided in a logical page sequence corresponding to at least one signature (25) for printing on a recording medium (6), said signature forming a section of a printed product and including a plurality of pages,
    at least one parameter of the recording medium (6) on which the print data is printed is defined that is relevant for the position of the print image on the recording medium (6) folded signature-wise,
    and in which a position correction of the respective print image on the pages is implemented dependent on said parameter, the folds of the recording medium (6) needed for producing said at least one signature (25) being computationally simulated with the assistance of a computer program so that the print images of successive pages of the folded signature lie exactly registered above one another, **characterized in that** the print data are provided on a web-shaped carrier and that the folds are carried out in two directions perpendicular to one another, and said correction taking place in the two directions perpendicular to one another.

2.  Method according to claim 1, wherein the folds of the signature (25) are computationally simulated for the position correction and wherein from the influence of each fold on the print image of at least one page the correction values for the print image of this page are calculated.

3.  Method according to claim 2, wherein the folds are simulated page-by-page with ascending or descending page number, pairs of successive page numbers being formed that due to the signatures come to lie on one another as a result of a fold and/or between which a fold is provided due to the signatures.

4. Method according to claim 3, wherein it is successively checked whether a physical fold possibility of the recording medium (6) is present as a result whereof the pages of a page pair of successive pages are arranged in reading sequence after the recording medium (6) has been folded to form the signature, a data-oriented fold being implemented when a fold is possible and the page pair being entered in a list when a physical fold cannot be implemented.

5. Method according to claim 4, wherein the page pairs present in the list are processed with priority over the other page pairs until a non-foldable page pair in the list is processed.

6. Method according to one of the preceding claims, wherein the thickness of the recording medium (6) is employed as a parameter.

7. Method according to one of the preceding claims, wherein all signatures (25) of the printed recording medium (6) that belong together are bound to form a printed product.

**Revendications**

1. Procédé de traitement de données d'impression conformément à une signature, dans lequel

les données d'impression sont disposées dans un ordre logique par pages correspondant à au moins une signature (25) en vue de l'impression sur un support d'information (6), la signature formant une partie d'un produit d'impression et contenant plusieurs pages,

au moins un paramètre du support d'information (6), sur lequel les données d'impression sont imprimées, est approprié à la position de l'image d'impression sur le support d'information (6) plié conformément à la signature, et

une correction de position de l'image d'impression correspondante est effectuée sur les pages avant l'impression en fonction du paramètre, les pliages du support d'information (6) nécessaires pour générer la signature (25) étant simulés numériquement à l'aide d'un programme informatique, de sorte que les images d'impression de pages successives de la signature sont agencées précisément les unes au-dessus des autres, **caractérisé en ce que** les données d'impression sont disposées sur support en forme de bande, et **en ce que** les pliages sont effectués dans deux directions perpendiculaires entre elles et la correction est effectuée dans les deux directions perpendiculaires entre elles.

2. Procédé selon la revendication 1, dans lequel les pliages de la signature (25) sont simulés numériquement en vue de la correction de position, et les valeurs de correction pour l'image d'impression de cette page sont calculées à partir de l'effet de chaque pliage sur l'image d'impression d'au moins une page.

3. Procédé selon la revendication 2, dans lequel les pliages sont simulés par pages avec des numéros de page croissants ou décroissants, des paires de numéros de page successifs étant à chaque fois formées qui viennent se placer les uns sur les autres par un pliage conformément à la signature et/ou entre lesquels il est prévu un pliage conformément à la signature.

4. Procédé selon la revendication 3, dans lequel il est vérifié successivement s'il existe une possibilité de pliage physique du support d'information (6) permettant d'agencer les pages d'une paire de pages successives conformément au pliage du support d'information (6) par rapport à la signature dans l'ordre de lecture, un pliage numérique étant réalisé lors de la possibilité de pliage existante, et, dans le cas d'une impossibilité physique, la paire de pages est reçue dans une liste.

5. Procédé selon la revendication 4, dans lequel les paires de pages existantes dans la liste sont traitées en priorité avant les autres paires de pages jusqu'à ce qu'une paire de pages non pliables soit traitée dans la liste.

6. Procédé selon l'une des revendications précédentes, dans lequel l'épaisseur du support d'information (6) est prise comme paramètre.

7. Procédé selon l'une des revendications précédentes, dans lequel toutes les signatures (25) allant ensemble du support d'information imprimé (6) sont reliés pour donner un produit d'impression.

Fig. 1

**Fig. 2**

**Fig. 3**

Fig. 4

Fig. 5

**Include variable data**

Variable data

Selection

/$VARIABLE/st24adrboldx25y15.pa6

Variable data on pages (increasing order)

14,3*n/2+10,n-6,n

OK    Cancel    Help

**Fig. 6**

**Impositioning**

Define page layout and sequence

N-UP

Two Up

Scheme                                    Layout

scheme 1                                  tumble

Define target paper size

A4        X  21.00  cm    Y  29.70  cm

Define objects on the page for identical Copy

17

Number in direction    x  [1]              [1]

Spacing between
origins in direction    x  [1]  cm         [1]  cm

OK    Cancel    Help

**Fig. 7**

**Fig. 8**

Define signatures

Sections | Mark

Number of sections | 20

List of sections

Selection of sections | Length of section
17<20 | 24

Actual length of section | 1

☑ Reverse order

| Sections | Pages per section |
|----------|-------------------|
| 1<5 | 32 |
| 6<10 | 24 |
| 11 | 32 |
| 12 | 12 |
| 13<16 | 32 |
| 17<20 | 24 |

OK | Cancel | Help

**Fig. 9**

Image positioning

Options

Centered print | no

Positions

Pages | 3

Side | front

Image | 1

X | 0 | mm

Y | 0 | mm

List of image positions

| Pages | Side | Image | X | Y |
|-------|------|-------|-----|-----|
| 3 | front | 1 | 0mm | 0mm |

OK | Cancel | Help

**Fig. 10**

**Fig. 11**

Define marks

Marks

Selection

/$MARKS/blacksheet

Pages

5

Options of marks

Extent    Position    Offset

X    0    0    0    mm

Y    0    0    0    mm

List of selected marks

| Marks | Pages | Extent/X | Extent/Y | Position/X | Position/Y | Offset/X | Offset/Y |
|-------|-------|----------|----------|------------|------------|----------|----------|
| $MARKS/black | 5 | 0mm | 0mm | 0mm | 0mm | 0mm | 0mm |

OK    Cancel    Help

## Fig. 12

Input trays and job offset

Selection

Sheets

2

Input tray    A

Job offset    yes

List of selected trays and job offsets

| Sheets | Trays | Job offset |
|--------|-------|------------|
| 2 | A | yes |

OK    Cancel    Help

## Fig. 13

Fig. 14

EP 1 179 201 B1

| 32 (31) | 1 (2) | 4 (3) | 29 (30) | 28 (27) | 5 (6) | 8 (7) | 25 (26) |
| 17 (18) | 16 (15) | 13 (14) | 20 (19) | 21 (22) | 12 (11) | 9 (10) | 24 (23) |

35 44 6

45 41 45 42 45 43 45

Zig-Zag-Faltung an 3 Kanten

36

44

44

E4
E3
E2
E1

50

E8
E7
E6
E5
E1
E2
E3
E4

51

Faltung um die Mittelachse (44)

37

44

45

Faltung um die Längsachse
(45) und Beschneiden der Kanten

38

32 | 1

45

**Fig. 15**

21

Fig. 16

EP 1 179 201 B1

| | Spalte 1 | Spalte 2 | | | | | | Spalte 8 |
|---|---|---|---|---|---|---|---|---|
| Reihe 1 | 32 (31) | 1 (2) | 4 (3) | 29 (30) | 28 (27) | 5 (6) | 8 (7) | 25 (26) |
| Reihe 2 | 17 (18) | 16 (15) | 13 (14) | 20 (19) | 21 (22) | 12 (11) | 9 (10) | 24 (23) |

# Fig. 17a

NULL       NULL

↑Up       ↑Up

Row 1:NULL ← Back
```
Front page: 32
Back page: 31
Level: 1
Row: 1
Column: 1
```
Next →
```
Front page: 1
Back page: 2
Level: 1
Row: 1
Column: 2
```
Next → usw.

← Back

↓Down       ↓Down

NULL       NULL

NULL       NULL

↑Up       ↑Up

Row 2:NULL ← Back
```
Front page: 17
Back page: 18
Level: 1
Row: 2
Column: 1
```
Next →
```
Front page: 16
Back page: 15
Level: 1
Row: 2
Column: 2
```
Next → usw.

← Back

↓Down       ↓Down

NULL       NULL

# Fig. 17b

main — S1

n := 2; m := 3

End main

Ja — S12

Ist Endekriterium erreicht?
(n > lastpage-2) && (m > lastpage-1

Nein

Sub :
Faltung möglich? — S2

* lastpage: letzte Seite
in der Signatur

Ja

Simuliere Faltung:
Neuberechnung von
level, column, up, down,
back und next für jedes
Element der Signaturenliste.

Nein

Ist das Seitenpaar (n,m)
in prio_liste eingetragen? — S3

Nei — S10

J

(n,m) an das Ende I
prio_liste einfügen

S4

S11

Enthält prio_liste vorgemerkte Seitenpaare?

Nein

n := n+2
m := m+2

S9

Ja — S5

Nehme ersten Eintrag aus
prio_liste (x,y) als neues
Seitenpaar: n = x; m = y;

Nein

Ist das aktuelle Seitenpaar (n,m) auch in
prio_liste enthalten?

Liste der vorgemerkten Seitenpaare: prio_liste

| (x,y) | (x2,y2) | (x3,y3) | |

S6

Ja

Nehme nächsten Eintrag
(x,y) nach (n,m) in prio_liste
als neues Seitenpaar:
n = x; m = y; — S8

Lösche (n,m) aus prio_liste

Liste der vorgemerkten Seitenpaare: prio_liste

| (x,y) | (n,m | | |

S7

Nein

War (n,m) der letzte
Eintrag in prio_liste

Ja

# Fig. 18a

Sub:
Faltung möglich?

S13

Suche n und m in den
Signaturenlisten Row 1
und Row 2

S14

Liegen n und m
in gleicher Reihe?
(n in row 1 und m in row1)
oder
(n in row2 und m in row2)

Nein →

End main

Ja

S18

Liegen n und m
in gleicher Spalte,
n.row = m.row, d. h.
nächste Faltung
ist die an Kante 44
(Signaturenfaltung)?

Nein

Ja

S15

Ist die Anzahl der
Spalten zwischen n und m,
(n.column-m.column),
ungerade?

Nein →

Ausgabe "nein"

S17

Ja

S16

Liegen n und m beide
auf oberstem oder beide
auf unterstem Level in der
gefalteten Signatur?
(n.up = m.up = NULL) oder
(n.down = m.down = NULL)

Nein

Ja

Ausgabe "ja"

S19

**Fig. 18b**

Fig. 19